# EUROPEAN PATENT SPECIFICATION

(11) **EP 1 372 353 B1**
(45) Date of publication and mention of the grant of the patent: **05.08.2009**
(21) Application number: 02388041.2
(22) Date of filing: 13.06.2002
(51) Int. Cl.: H04R 1/10, H04B 1/38, H04M 1/05

(54) **A communications headset**
Kommunikationskopfhörer
Casque d'écoute de communication

(43) Date of publication of application: 17.12.2003
(73) Proprietor: Sony Ericsson Mobile Communications AB, 221 88 Lund (SE)
(72) Inventor: Van Der Bilt, Casper, 7812 CC Emmen (NL); Schreuder, Johannes Lucas, 9531 AE Borger (NL)
(74) Representative: Münzer, Marc Eric

(56) References cited:
- DE-U- 20 016 465
- US-A- 5 655 026
- US-A- 5 708 724
- US-A- 6 101 260
- US-A1- 2002 021 800
- PATENT ABSTRACTS OF JAPAN vol. 2002, no. 05, 3 May 2002 (2002-05-03) -& JP 2002 034089 A (AUDIO TECHNICA CORP), 31 January 2002 (2002-01-31)

## Description

### Technical area

The invention relates to a communications headset to be worn on an ear of a user.

### Related prior art

A communications headset of the above-mentioned type is known from US-A-6 101 260 which discloses a headset comprising a housing to be positioned against the ear of a user and being provided with a speaker, a hook to be positioned above and behind the ear of a user, and a boom extending from the housing towards the user's mouth and being provided with a microphone. The headset is for use with e.g. switchboards and is provided with a cable for connecting the headset with the switchboard. The hook is configured for being adjusted to hold the headset securely on the ear when it is worn by a user. Furthermore, the hook is connected to the housing in such manner that the housing is biased against the ear when the user communicates through the headset, but the connection between the hook and the housing also allows the housing to be rotated away from the ear while the headset is still held securely on the ear. Thereby the user, such as a receptionist, is able to better communicate with other persons in the room without having to remove the headset as such.

Another known headset comprises an in-ear speaker with a microphone provided at a wire. Due to the smallness of such headsets the speaker and microphone does not provide good sound pick-up and reproduction, and many users will not find them satisfactory for daily use.

DE-U-20016465 discloses a communication headset to be worn on an ear of the user comprising a housing provided with a speaker and a microphone, and a hook connected to the housing through a joint, said hook being configured for being positioned above and behind the ear of a user when the headset is worn by the user; wherein said headset is configured with rotation means that allows the hook to be rotated about an axis between a position in which it is located close to the housing and a position in which it protrudes from the housing, and wherein the housing is provided with a concha-engaging part that protrudes from the housing and is adapted to be positioned in the concha of the ear when the headset is worn by the user.

Other known headsets are disclosed in JP2002034089, US-5655026, US-2002/0021800 and US-5708724. These documents all shown headsets comprising different features.

### Object of the invention

The headset described above with an external housing does provide good sound pick-up and reproduction since the housing makes room for the necessary electronic components. However, it comprises a large number of elements that are interconnected through a number of rotatable joints; thus, the headset is relatively difficult to put on the ear and must be adjusted each time it is put on. This may be acceptable for use at a switchboard where the headset is put on and removed only a few times each day.

However, if the headset is used for other applications, e.g. hands-free use of mobile telephones, the headset will be put on and removed frequently during the day, and it is desirable that the headset can be put on and removed readily and quickly and preferably by use of one hand only and with only small adjustments, if any, when it is put on. This may be achieved by the above-mention in-ear headset; however, due to the smallness of this headset the sound pick-up and reproduction quality is low.

It is therefore an object of the present invention to provide a headset that can be easily and quickly put on and removed from the ear, while maintaining the advantages of a headset provided with an external housing.

### Summary of the invention

The object of the invention is achieved by arranging the communications headset mentioned in the opening paragraph as mentioned in claim 1.

The concha of the ear is very similar from person to person and by providing the headset with a concha-engaging part it is achieved that the headset readily suits almost any person irrespective of the shape of the ear, and that it can readily be put on with one hand and without need for detailed adjustment.

By configuring the joint between the hook and the housing to allow rotation about an axis perpendicular to the housing, it is made possible to adjust the housing after the headset has been put on the ear in order to direct the microphone provided in the housing towards the mouth.

Furthermore, by building the rotation means into the hook it is achieved that the joint connection between the hook and the housing can be kept very simple which facilitates the assembly of the hook and housing.

The rotation means preferably comprises an indexing hinge so that the hook can be positioned in a predetermined position before it is put on the ear. Thereby the the put-on manoeuvre is made easier.

The indexing hinge may comprise indexing faces provided on one part and a leaf spring provided on another part, said leaf spring engaging an indexing face. This kind of indexing spring can be manufactured at low costs and is easily built into the relatively small parts of the headset.

Preferably the joint between the housing and the hook is provided as a releasable snap-coupling. Thereby the hook can be dismounted from the housing, e.g. if it is desired to transform the headset from right-ear use to left-ear use or vice versa.

The releasable snap-coupling may comprise friction increasing means for increasing the frictional resistance against rotation between the housing and the hook so that the housing can be safely held in the right position after adjustment.

The friction increasing means may comprise a ring-shaped rubber part adapted to snap-couple with a complementary socket, and preferably the ring-shaped rubber part is provided at the hook and the complementary socket is provided on the housing.

In a second embodiment of the headset according to the invention the rotation means is located at the joint between the hook and the housing. In this embodiment the hook can be made very simple since it need not be provided with any technical means.

Also in this embodiment the joint between the housing and the hook is preferably provided as a releasable snap-coupling so that the hook can be easily dismounted and re-mounted, e.g. for transforming the headset from right-ear use to left-ear use or vice versa.

Preferably the housing is provided with means for wireless communication with an electronic device which may be a mobile telephone. Alternatively, the headset according to the invention may be provided with a wire connectable to an electronic device.

It shall be emphasised that the term "comprise/comprising" when used in this specification is taken to specify the presence of stated features, integers, steps or components but does not preclude the presence or addition of one or more other features, integers, steps components or groups thereof.

### Description of the drawings

The invention will be described in detail in the following with reference to the drawings in which
Fig. 1 shows a first embodiment of a headset according to the invention;
Figs 2a-2c show the sequence of how to put on the headset shown in Fig. 1;
Figs 3a-3b show how to transform the headset shown in Fig. 1 from right-ear use to left-ear use;
Fig. 4 shows a cross-section of the joint between the hook and the housing of the headset shown in Fig. 1;
Fig. 5 shows the hook of the headset shown in Fig. 1 separated from the housing;
Fig. 6 shows a second embodiment of a headset according to the invention;
Fig. 7 shows in an enlarged view a hinge connection applicable in the headset shown in Fig. 6; and
Fig. 8 shows an alternative hinge connection applicable in the headset shown in Fig. 6.

### Detailed description of an embodiment of the invention

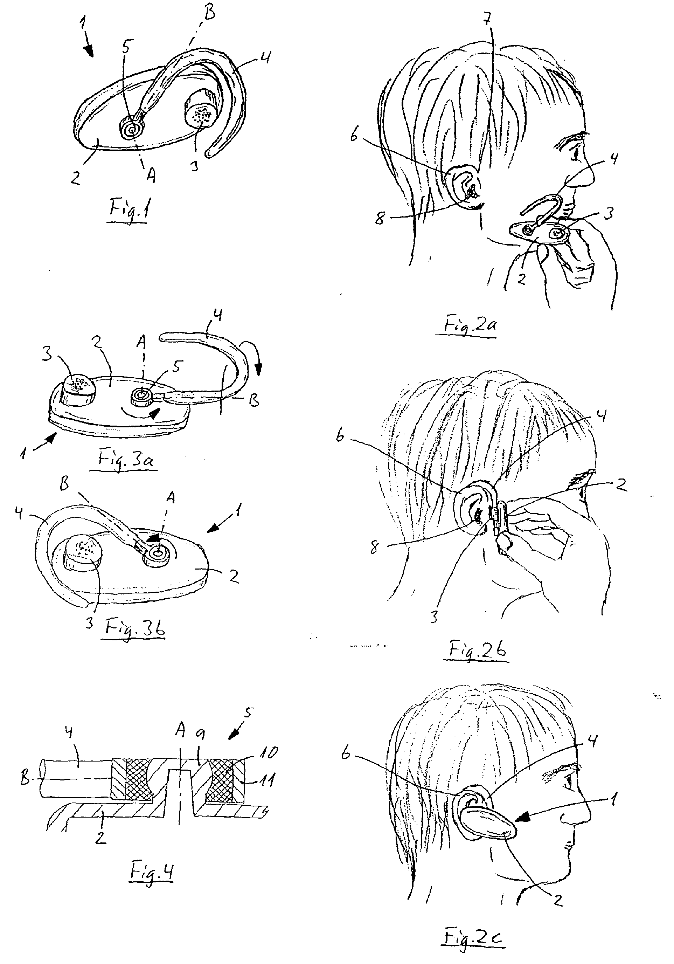

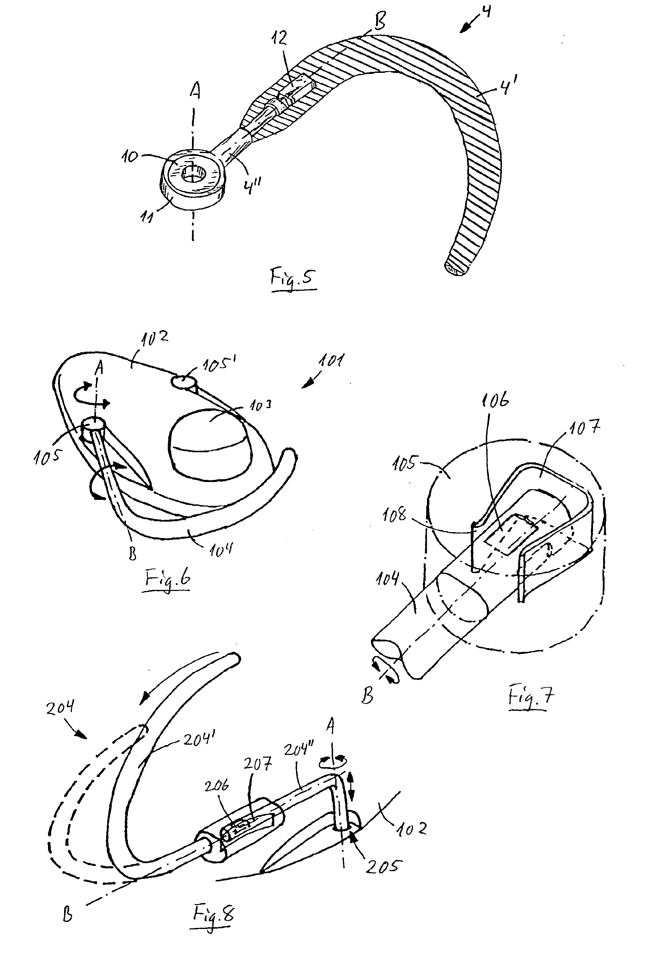

Fig. 1 shows a first embodiment of a headset 1 according to the invention. The headset 1 comprises a housing 2 provided with a protruding concha-engaging part 3 and a hook 4. The hook 4 is rotatably connected to the housing 2 via a joint 5 allowing the hook 4 to rotate about an axis A. The joint 5 will be described in detail below with reference to Fig. 4. The hook 4 is also arranged to be rotatable about an axis B whereby the ear-engaging part of the hook 4 can be swung out from the housing 2 of the headset 1. A structure allowing such rotation will be described below with reference to Fig. 5.

The housing 2 of the headset 1 preferably comprises injection moulded plastics shell parts that encloses electronic components provided within the housing 2. The protruding concha-engaging part 3 may be integrally moulded with one of the plastics shell parts or it may be a separate element that is connected to the housing in any known manner. A speaker is provided in the concha-engaging part 3, and a microphone is provided in the housing 2 at the end thereof opposite the concha-engaging part 3. These components and any other electronic components provided in the housing may be of any conventional type and will not be described in detail in this specification.

The concha-engaging part 3 is shaped as a short, cylindrical plug with a softly rounded and inclined top face adapted to abut on the concha of the user's ear. The diameter of the concha-engaging part 3 is chosen such that it suits almost any person while still giving room for the speaker therein.

The hook 4 has a curved configuration that allows it to be positioned above and behind the ear. The curved configuration of the hook 4 is fixed and is provided with a curvature that is so large that it fits above and behind the ear of almost any person. In the headset 1 according to the invention it is not important that the hook 4 has a curvature corresponding exactly to the helix (the rear part) of the ear since the headset 1 is not secured to the ear by the hook 4 alone, but via co-operation of the hook 4 and the concha-engaging part 3.

Figs 2a-2c show the sequence of how to put the headset 1 on an ear of a user. First, the hook 4 is rotated approximately 90° around the axis B to achieve the configuration shown in Fig. 2a. In this configuration the hook 4 is positioned above and behind the ear 6 as shown in Fig. 2b. The hook 4 rests on the base point 7 of the ear 6 and is supported behind the ear 6 without being configured to the exact shape of the helix of the ear 6. From the position shown in Fig. 2b the housing 2 is rotated in relation to the hook 4 while at the same time the concha-engaging part 3 is manoeuvred into the concha 8 of the ear 6 whereby the end position shown in Fig. 2c is reached.

In this end position the headset 1 is securely fixed at the ear 6 by means of the hook 4 positioned above and behind the ear 6 and the concha-engaging part 3 engaging the concha 8 of the ear 6. Any adjustment, e.g. for directing the microphone in the housing 2 towards the mouth, is easily made by rotating the housing 2 about the concha-engaging part 3, thereby also slightly rearranging the angular orientation of the hook 4.

The headset 1 shown in Figs 1-2c is easily put on the ear 6 by use of one hand only as illustrated in Figs 2a-2c. Since it is only necessary and possible to adjust the headset by rotating the housing 2 about the concha-engaging part 3 located in the concha 8 of the ear 6, the adjustment can also be made with one hand.

In figs 2a-2c it is shown how the headset 1 is put on a right ear 6. The headset 1 is, however, easily transformed to left-ear use by double-rotating the hook 4 as illustrated in Figs 3a-3b. The transformation is achieved by rotating the hook 4 about the axis A at the joint 5 and about the axis B as indicated by the arrows in Figs 3a-3b. In relation to the configuration for right-ear use shown in Fig. 1 the configuration for left-ear use shown in Fig. 3b is achieved by rotating the hook 4 approximately 270° about the axis A and approximately 180° about the axis B. Due to the symmetry of all the parts constituting the headset 1, the headset 1 is put on, adjusted and worn in exactly the same manner regardless whether it is used in the right-ear configuration shown in Fig. 1 or in the left-ear configuration shown in Fig. 3b.

If the hook 4 is releasable from the housing 2 - as it is the case if the joint 5 is configured as illustrated in Fig. 4 which will be described below - the transformation of the headset 1 from right-ear configuration to left-ear configuration can also be achieved by dismounting the hook 4 from the housing 2, rotating it 180° and re-mount it on the housing 2.

Fig. 4 shows a cross-section of the joint 5 between the hook 4 and the housing 2 of the headset 1 shown in Figs 1-3b. The joint 5 is provided as a releasable snap-coupling comprising an at least partly ball-shaped socket 9 protruding from the housing 2 and a complementary ring-shaped rubber part 10 securely fixed in a ring element 11 of the hook 4. By providing the hook 4 with a ring-shaped rubber part 10 a snap-coupling is provided between the socket 9 at the housing 2 and the hook 4 since the ring-shaped rubber part 10 allows the socket 9 to be forced into the ring-shaped rubber part 10 by elastic deformation thereof.

Apart from forming a snap-coupling, the ring-shaped rubber part 10 also provides increased friction between the socket 9 and the hook 4. This feature contributes to holding the housing 2 in the correct position after adjustment of the headset 1 when it has been put on the ear 6.

Fig. 5 shows partly in cross-section the hook 4 of the headset shown in Fig. 1 separated from the housing 2. The hook 4 comprises two parts: an ear engaging part 4' and a joint part 4". The ear engaging part 4' comprises the curved part of the hook 4 and the joint part 4" comprises a straight rod provided with a ring element 11 with the rubber part 10 described above and shown in Fig. 4. The ear engaging part 4' and the joint part 4" are interconnected in such manner that the two parts are mutually rotatable about the axis B.

A so-called "flip-hinge" or an indexing hinge 12 is provided between the ear-engaging part 4' and the joint part 4", which indexing hinge 12 is provided with spring means that biases the ear-engaging part 4' towards a number of predetermined positions in relation to the joint part 4". One of these positions is to the position shown in Fig. 2c where the headset 1 is mounted on an ear 6 of a user with the hook 4 positioned close to the housing 2. Another possible position is the position shown in Fig. 2a with the hook 4 protruding from the housing 2. The indexing hinge 12 may be of any conventional type and will not be discussed in further detail herein.

Reference is now made to Fig. 6 that shows a second embodiment of a headset 101 according to the invention. This headset 101 also comprises a housing 102, a concha-engaging part 103 and a hook 104. The hook 104 is connected to the housing via a joint 105 that allows the hook 104 to be rotated about an axis A. The hook 104 is further provided with means that allows the hook 14, or at least the ear-engaging part thereof, to be rotated about an axis B.

The headset 101 corresponds in many aspects to the headset 1 shown in Figs 1-5, and it is put on the ear in the same manner, i.e. by first rotating the hook 104 to a position in which it extends substantially perpendicular to the housing 102, placing the hook 104 above and behind the ear, and rotating the housing 102 towards the ear in such manner that the concha-engaging part 103 becomes located in the concha of the ear. If adjustment is necessary, e.g. to ensure that the microphone points towards the mouth, the housing 102 can be rotated about the concha-engaging part 103 located in the concha of the ear.

As shown in Fig. 6 the housing 102 is provided with two symmetrically arranged joints 105,105' which means that transformation of the headset 101 from the shown left-ear use to right-ear use is achieved by dismounting the hook 104 from the joint 105 and re-mount it on the joint 105'.

For rotation of the hook 104 about the axis B the joint 105 between the hook 104 and the housing 102 may comprise an indexing hinge as illustrated in Fig. 7. In this embodiment the proximal end of the hook 104 is provided with four indexing faces 106, and the joint 105 is provided with a U-shaped leaf spring 107 abutting on two opposing indexing faces 106. The U-shaped leaf spring 107 allows the hook 104 to rotate in the joint 105, while it is biased towards any of the four positions defined by the position of the indexing faces 106. The hook 104 can be pulled out of the U-shaped leaf spring 107 and thereby out of the joint 105, and outwardly inclined end faces 108 provided at the U-shaped leaf spring 107 allows the hook 104 to re-enter the joint 105 by forcing the end of the hook 104 in between the legs of the U-shaped leaf spring 107. This snap-coupling provided at the joint 105 is relevant when the headset 101 is to be transformed between left-ear use and right-ear use.

In another embodiment applicable in the headset 101 for rotating a hook 204 about the axis B, the hook 204 itself may be provided with an indexing hinge between an ear-engaging part 204' and a joint part 204" as illustratively shown in Fig. 8. In this embodiment the joint 105 has been replaced by an opening 205 provided in the housing 102 into which the joint part 204" of the hook 204 is rotatably and releasably mounted.

In this embodiment the joint part 204" has an end provided with indexing faces 206 that engage an indexing leaf spring 207 provided at the ear-engaging part 204' of the hook 204. When the ear-engaging part 204' of the hook 204 is rotated, the indexing leaf spring 207 is brought out of engagement with one indexing face 206 and becomes engaged with another indexing face 206. The spring action of the indexing spring 207 causes the ear-engaging part 204' to be biased against any position defined by the location of the indexing faces 206. One of these positions is the in-use position where the hook 204 is located close to the housing 102 and another position is the ready-to-put-on position in which the hook 204 protrudes from the housing 102.

The invention has been described with reference to preferred embodiments of the headset as shown in Figs 1-8. However, the headset may comprise other features than the ones shown. For example, the headset shown in Figs 1-8 is intended for wireless communication with an electronic communications device, such as a mobile telephone, but the principles of the invention are equally applicable in a headset provided with a wire connected to the electronic communications device.

## Claims

1. A communications headset (1; 101) to be worn on an ear (6) of a user, said headset (1;101) comprising:
- a housing (2;102) provided with a speaker, a microphone and a concha-engaging part (3;103) that protrudes from the housing (2;102) and is adapted to be positioned in the concha (8) of the ear (6) when the headset (1;101) is worn by the user, and
- a hook (4;104;204) connected to the housing (2;102) through a joint which is configured for allowing rotation about an axis (A) perpendicular to the housing (2;102), said hook (4;104;204) comprising an ear-engaging part (4';204') and a joint part (4";204") and being configured for being positioned above and behind the ear (6) of a user when the headset (1;101) is worn by the user;
said headset (1;101) being configured with rotation means which are provided between said ear-engaging part (4';204') and said joint part (4";204") and which allows the hook (4;104;204) to be rotated about an axis (B) between a position in which it is located close to the housing (2;102) and a position in which it protrudes from the housing (2;102).

2. A headset according to claim 1, **characterised in that** said rotation means comprises an indexing hinge (12;106,107;206,207).

3. A headset according to claim 2, **characterised in that** the indexing hinge (106,107;206,207) comprises indexing faces (106;206) provided on one part (104;204") and a leaf spring (107;207) provided on another part (105;204'), said leaf spring (107;207) engaging an indexing face (106;206).

4. A headset according to claim 1, 2 or 3, **characterised In that** the joint (5) between the housing (2) and the hook (4) is provided as a releasable snap-coupling.

5. A headset according to claim 4, **characterised in that** the releasable snap-coupling comprises friction increasing means for increasing the frictional resistance against rotation between the housing (2) and the hook (4).

6. A headset according to claim 5, **characterised in that** the friction increasing means comprises a ring-shaped rubber part (10) adapted to snap-couple with a complementary socket (9).

7. A headset according to claim 6, **characterised in that** the ring-shaped rubber part (10) is provided at the hook (4) and the complementary socket (9) is provided on the housing (2).

8. A headset according to any one of claims 1-7, **characterised in that** said rotation means is located at the joint (105) between the hook (104) and the housing (102).

9. A headset according to claim 8, **characterised in that** the joint (105) between the housing (102) and the hook (104) is provided as a releasable snap-coupling.

10. A headset according to any one of claims 1-9, **characterised in that** the housing (2; 102) is provided with means for wireless communication with an electronic device.

11. A headset according to claim 10, **characterised in that** the electronic device is a mobile telephone.

## Patentansprüche

1. Kommunikationssprechgarnitur (1; 101) zum Tragen an einem Ohr (6) eines Nutzers, die Sprechgarnitur (1; 101) umfasst:
- ein Gehäuse (2; 102) versehen mit einem Lautsprecher, einem Mikrophon, und einem ohrmuschelergreifendes Teil (3; 103), das sich von dem Gehäuse (2; 102) erstreckt und ausgebildet ist, um an der Ohrmuschel (8) des Ohres (6), wenn eine Sprechgarnitur (1; 101) von einem Nutzer getragen wird, angeordnet zu werden, und
- einen Haken (4; 104; 204), welcher durch ein Gelenk, welches angeordnet ist, um eine Drehung um eine zu dem Gehäuse (2; 102) senkrechte Achse (A) zu erlauben, mit dem Gehäuse (2, 102) verbundenen ist, wobei der Haken (4; 104; 204) ein ohrergreifendes Teil (4'; 204') und ein Gelenkteil (4"; 204") aufweist und ausgebildet ist, um über und hinter dem Ohr (6) eines Nutzers angeordnet zu werden, wenn die Sprechgarnitur (1; 101) von dem Nutzer getragen wird; die Sprechgarnitur (1; 101) ist mit Drehmitteln versehen, die zwischen dem ohrergreifenden Teil (4'; 204') und dem Gelenkteil (4"; 204") angeordnet sind und die es dem Haken (4; 104; 204) gestatten um eine Achse (B) zwischen einer Position in der er nahe an dem Gehäuse (2; 102) angeordnet ist und einer Position in der er von dem Gehäuse (2; 102) absteht rotiert zu werden.

2. Sprechgarnitur nach Anspruch 1, **dadurch gekennzeichnet, dass** die Drehmittel ein Indiziergelenkteil (12; 106; 107; 206; 207) umfassen.

3. Sprechgarnitur nach Anspruch 2, **dadurch gekennzeichnet, dass** das Indiziergelenkteil (106; 107; 206; 207) auf einem Teil (104; 204") vorgesehene Indizierflächen (106; 206) und eine auf einem anderen Teil (105; 204') vorgesehene Blattfeder (107; 207) umfasst, wobei die Blattfeder (107; 207) mit der Indizierfläche (106; 206) in Eingriff steht.

4. Sprechgarnitur nach Anspruch 1, 2 oder 3, **dadurch gekennzeichnet, dass** das Gelenk (5) zwischen dem Gehäuse (2) und dem Haken (4) mit einem lösbaren Einrastverschluss versehen ist.

5. Sprechgarnitur nach Anspruch 4, **dadurch gekennzeichnet, dass** der lösbare Einrastverschluss reibungserhöhende Mittel umfasst, um den Reibwiderstand gegen eine Drehung zwischen dem Gehäuse (2) und dem Haken (4) zu erhöhen.

6. Sprechgarnitur nach Anspruch 5, **dadurch gekennzeichnet, dass** die reibungserhöhenden Mittel ein ringförmiges Gummiteil (10) umfassen, das geeignet ist, um in einem komplementären Sockel (9) einrastend zu verschließen.

7. Sprechgarnitur nach Anspruch 6, **dadurch gekennzeichnet, dass** das ringförmige Gummiteil (10) an dem Haken (4) vorgesehen ist und der komplementäre Sockel (9) an dem Gehäuse (2) vorgesehen ist.

8. Sprechgarnitur nach einem der Ansprüche 1-7, **dadurch gekennzeichnet, dass** die Drehmittel an dem Gelenk (105) zwischen dem Haken (104) und dem Gehäuse (102) vorgesehen sind.

9. Sprechgarnitur nach Anspruch 8, **dadurch gekennzeichnet, dass** das Gelenk (109) zwischen dem Gehäuse (102) und dem Haken (104) mit einem lösbaren Einrastverschluss versehen ist.

10. Sprechgarnitur nach einem der Ansprüche 1-9, **dadurch gekennzeichnet, dass** das Gehäuse (2; 102) mit Mitteln zur kabellosen Kommunikation mit einem elektrischen Gerät versehen ist.

11. Sprechgarnitur nach Anspruch 10, **dadurch gekennzeichnet, dass** das elektrische Gerät ein Mobilfunktelefon ist.

## Revendications

1. Casque d'écoute de communication (1 ; 101) à porter sur l'oreille (6) d'un utilisateur, ledit casque d'écoute (1 ; 101) comprenant :
- un boîtier (2 ; 102) muni d'un haut-parleur, d'un microphone et d'une partie s'engageant sur la conque (3 ; 103) qui fait saillie par rapport au boîtier (2 ; 102) et est apte à être positionnée dans la conque (8) de l'oreille (6) lorsque le casque d'écoute (1 ; 101) est porté par l'utilisateur, et
- un crochet (4 ; 104 ; 204) relié au boîtier (2 ; 102) par l'intermédiaire d'un joint qui est configuré pour permettre la rotation autour d'un axe (A) perpendiculaire au boîtier (2 ; 102), ledit crochet (4 ; 104 ; 204) comprenant une partie s'engageant sur l'oreille (4' ; 204') et une partie formant joint (4" ; 204") et étant configuré pour être positionné au-dessus et derrière l'oreille (6) d'un utilisateur lorsque le casque d'écoute (1; 101) est porté par l'utilisateur ; ledit casque d'écoute (1 ; 101) étant configuré avec des moyens de rotation qui sont prévus entre ladite partie s'engageant sur l'oreille (4` ; 204') et ladite partie formant joint (4" ; 204") et qui permettent de faire tourner le crochet (4 ; 104 ; 204) autour d'un axe (B) entre une position dans laquelle il est situé près du boîtier (2 ; 102) et une position dans laquelle il fait saillie par rapport au boîtier (2 ; 102).

2. Casque d'écoute selon la revendication 1, **caractérisé en ce que** ledit moyen de rotation comprend une charnière crantée (12 ; 106, 107 ; 206, 207).

3. Casque d'écoute selon la revendication 2, **caractérisé en ce que** la charnière crantée (106, 107 ; 206, 207) comprend des faces crantées (106 ; 206) disposées sur une partie (104 ; 204") et un ressort à lame (107 ; 207) disposé sur une autre partie (105 ; 204'), ledit ressort à lame (107 ; 207) s'engageant sur une face crantée (106 ; 206).

4. Casque d'écoute selon la revendication 1, 2 ou 3, **caractérisé en ce que** le joint (5) entre le boîtier (2) et le crochet (4) est prévu sous la forme d'un raccord encliquetable amovible.

5. Casque d'écoute selon la revendication 4,
**caractérisé en ce que** le raccord encliquetable amovible comprend un moyen d'augmentation du frottement destiné à augmenter la résistance de frottement s'opposant à la rotation entre le boîtier (2) et le crochet (4).

6. Casque d'écoute selon la revendication 5,
**caractérisé en ce que** le moyen d'augmentation du frottement comprend une partie en caoutchouc de forme annulaire (10) apte à s'encliqueter sur une douille complémentaire (9).

7. Casque d'écoute selon la revendication 6,
**caractérisé en ce que** la partie en caoutchouc de forme annulaire (10) est disposée sur le crochet (4) et **en ce que** la douille complémentaire (9) est disposée sur le boîtier (2).

8. Casque d'écoute selon l'une quelconque des revendications 1 à 7, **caractérisé en ce que** ledit moyen de rotation est placé au niveau du joint (105) entre le crochet (104) et le boîtier (102).

9. Casque d'écoute selon la revendication 8,
**caractérisé en ce que** le joint (105) entre le boîtier (102) et le crochet (104) est prévu sous la forme d'un raccord encliquetable amovible.

10. Casque d'écoute selon l'une quelconque des revendications 1 à 9, **caractérisé en ce que** le boîtier (2 ; 102) est muni de moyens permettant une communication sans fil avec un dispositif électronique.

11. Casque d'écoute selon la revendication 10,
**caractérisé en ce que** le dispositif électronique est un téléphone mobile.
